# EUROPEAN PATENT SPECIFICATION

(11) **EP 2 360 491 B1**
(45) Date of publication and mention of the grant of the patent: **27.08.2014**
(21) Application number: 10152457.7
(22) Date of filing: 02.02.2010
(51) Int. Cl.: G01S 7/02, G01S 13/95, G02B 6/36, H01P 1/06, G01S 7/03, H01Q 1/12

(54) **Radar system with optical communications link within antenna pedestal**
Radarsystem mit optischer Kommunikationsverbindung innerhalb des Antennenständers
Système de radar avec lien de communication optique dans un support d'antenne

(43) Date of publication of application: 24.08.2011
(73) Proprietor: Enterprise Electronics Corporation, Enterprise, AL 36330 (US)
(72) Inventor: Knight, Michael B., Alabama 36330 (US)
(74) Representative: Barton, Russell Glen

(56) References cited:
- EP-A1- 0 982 608
- US-A- 5 140 289
- US-A1- 2005 093 734
- D. Vollbracht, F. Gekat, D. Hilger, M. Hille: "Waveguide Fibre Optic Rotary Joint for Antenna Mounted Radar Receivers" 34th Conference on Radar Meteorology 8 October 2009 (2009-10-08), XP007913440 Retrieved from the Internet: URL:http://ams.confex.com/ams/pdfpapers/15 5506.pdf> [retrieved on 2010-06-10]

## Description

### Technical Field

The present invention relates generally to pedestal communication techniques for weather radar systems. In further particularity the present invention relates to methods of high speed optical communications for Doppler weather radar systems and related apparatuses.

### Background Art

A great deal of reflectivity data is currently generated by modem dual polarized radar systems. These systems utilize polarizations that are altered sequentially between linear vertical and linear horizontal to capture data enhancing values, such as, for example: (1) reflectivity factors at both horizontal and vertical polarization; (2) differential reflectivity for two reflectivity factors; (3) cumulative differential phasing between the horizontally and vertically polarized echoes; (4) correlation coefficients between vertically and horizontally polarized echoes; and (5) linear depolarization ratios. In addition, Doppler velocity and spectrum width can be obtained by suitably processing the horizontally and vertically polarized return signals. Complex receivers and radar processors are utilized to receive and process reflectivity data captured by the radar antenna to produce these data enhancing values.

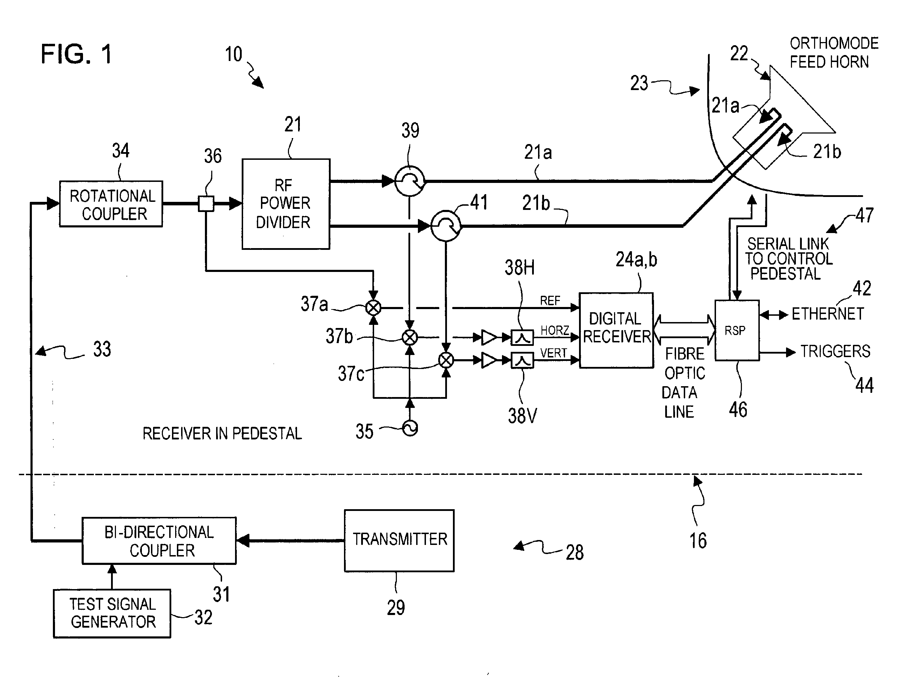

Dual polarized radar systems also allow for the implementation of precipitation classification schemes from inference radar processing of hydrometeor shapes as discussed in various papers authored by practitioners who work in these areas, such as, Ryzhkov, Liu, Vivekanandan, and Zrnic. In addition, by looking at phase differences between the horizontal and vertical components, the effects of partial beam blockage can be mitigated and greater clutter rejection can be obtained. These strategies require even more data to be analyzed and processed from the radar antenna, and many current dual polarization weather radar systems locate the radar system processor above the elevation and rotary coupler and above the requisite pedestal mounting to avoid limitations in communications through the radar pedestal. A system representative of a typical simultaneous dual polarization radar system is shown in Figure 1.

Zrnic originally disclosed a workable simultaneous dual polarized radar system by replacing the orthomode switch with a power splitter and an orthomode coupling at the antenna feed horn in U.S. Pat. No. 5,500,646. Zrnic also worked out the various calculations pertaining to simultaneous dual polarization radar systems as recorded in his '646 patent. Dual polarization weather radar systems are also disclosed by Alford in U.S. Pat. Nos. 6,803,875, 6,859,163 and 7,049,997, pertaining to modem dual polarization radar systems. Additional comments pertaining to the capturing of reflectivity data and the processing of such data will not be made as these incorporated references describe the basic theory and operation of such systems and such information is already understood in the industry and not necessary for a complete understanding of the herein described invention.

However, practical problems exist in the current dual polarization weather radar systems and in the above referenced Alford models due to the enormous amount of weather reflectivity data that must be received and processed by components located above the elevational coupling. Locating the digital receiver and processor below the elevation rotary coupler 34 in the radar pedestal increases the number of necessary waveguide channels travelling through the rotational coupler and requires the use of dual channel rotary couplers. Dual channel rotary couplers are known US 5140289 and EP0982608 A1 and are expensive and they also introduce phase errors between channels that vary with rotation, and such errors require complex compensation processing in the received radar returns limiting the reliability of reflectivity data in simultaneous dual polarization weather radar systems. Locating the signal processor below the elevation rotary coupler can reduce somewhat the amount of data transmitted through pedestal couplers, but it also creates problems in data transmission from the receivers to the signal processors. First, a complex and expensive slip ring would be required to transmit the data. Second, streaming raw I/Q data digitally over long distances introduces errors into the data resulting from noise introduction in the transmission cables. Due to the relatively large data bandwidth required in a dual simultaneously polarized radar system, differential parallel transmission lines must be utilized and data integrity can be impacted in electrically noisy environments. Providing an alternate path for data transmission from the receivers to the signal processors would simplify the slip ring assembly by requiring only paths for power, reference, Ethernet communications, and antenna motor drives. But, currently, such a system does no exist.

Alternatively, locating digital receivers and processors above the elevation coupling 34 of a radar pedestal diminishes the amount of data that must be downloaded through the radar pedestal. However, locating the receiver over the elevational coupler, such as is shown in Figure 1, locates active electronics, such as the receiver and signal processor, in an enclosure in the pedestal. The enclosure must be environmentally controlled with, for example, solid state heating and cooling units, and components may fail under high thermal loads and a simultaneous dual polarization radar system may experience changes in performance as temperature fluctuates. Maintaining a known environment can be costly and difficult, especially when the required known environment is located high up, above the elevation rotary coupler 34 in the radar pedestal where large temperature fluctuations are common. A preferred approach, would be to position the receiver above the elevational coupling while maintaining the processor components below the elevational coupling. Such an arrangement would diminish the environmental demands placed on the electronics above he elevational coupling, while allowing for superior reception of weather reflectivity data. However, such an arrangement would place high demands on the communication conduits present in a radar system pedestal, due to the large amount of data that must be communicated to the processor in near real time, and present pedestal slip rings can frustrate such an arrangement.

Therefore, what is needed is an improved method for moving large amounts of data down the antenna pedestal in a dual polarization weather radar system that makes practical the positioning of a signal receiver above the elevation rotary coupler connected to a signal processor located below the elevational coupler, and/or to support the locating of both the signal receiver and the signal processor below the elevation rotary coupler and supplying reflectivity data directly from the antenna to these components in near real time.

### Disclosure Of The Invention

In summary, as specified in claim 1 a simultaneous dual polarization radar system is disclosed repositioning critical processing components below the elevational coupling in a radar pedestal to avoid radar emission pulse train corruption due to waveguide phase error introductions and to fully capitalize on the simultaneous transmission of polarized signals. A fiber optic rotational coupler is integrated into the system to allow for an improved data path for data transmissions from the receivers to the signal processors, and to allow for transmission of reflected signal returns from the receiver subsystem located above the elevation rotary coupler to the radar system processor located below the elevation rotary coupler. Such an arrangement may be also used to transmit reflectivity data from a radar antenna to a receiver located below or "off'' a radar pedestal.

### Brief Description Of The Drawings

An improved data communications system for dual polarization radar systems incorporating the features of the invention is depicted in the attached drawings which form a portion of the disclosure and wherein:
Figure 1 is a diagram of a representative dual polarization radar system in which the radar signal processor is co-located with the digital receiver;
Figure 2 is a diagram of a preferred simultaneous dual polarization radar system having the radar processor positioned below the rotational joint and incorporating a Klystron transmitter; and,
Figure 3 is a diagram of a preferred simultaneous dual polarization radar system having the radar processor positioned below the rotational joint with an optional power divider bypass;
Figure 4 is a diagram of a low cost dual polarization receiving system to allow for collection of linear depolarization ratios having the radar processor positioned below the elevation rotary coupler .
Figure 5 is an elevational view of the fiber optic rotational coupler.
Figure 6 is a superior view of the fiber optic rotational coupler showing the interior coaxial conduit.
Figure 7 is a 90° rotated elevational view of the fiber optic rotational coupler of Figure 5.

### Best Mode for Carrying Out Invention

Referring to the drawings for a better understanding of the function and structure of the invention, Figure 1 shows the basic active electronics simultaneous dual polarization radar system, such as the receiver and signal processor, are located in small shielded enclosures. The enclosures should be environmentally controlled with, for example, solid state heating and cooling units. Maintaining a stable thermal environment is crucial to proper operation of the radar system. Components may fail under high thermal loads and a simultaneous dual polarization radar system may experience changes in performance as temperature fluctuates. For example, changes to the phase and frequency stability could be encountered, thereby limiting the ability to receive reliable weather data. However, maintaining a known environment can be accomplished by utilizing solid state (e.g. Peltier) cooling-heating technology. In light of recent component size reductions and power consumption, environmental control and repositioning of the digital receiver 24 into a location adjacent to the radar antenna has become feasible. Therefore, Peltier based temperature controls provide a satisfactory solution to controlling encountered environmental conditions. Because the radar signal processor 46 is located below the elevation rotary coupling, environmental control of and access to its enclosure is simplified.

As will be understood by those in the art, one potential disadvantage of Zrnic's '646 system is the division of transmit power. An operator wanting to transmit and analyze data in a single polarization mode at 500 KW will require, for example, a 1 MW transmitter. A solution to this issue is to insert a mechanical transfer switch into the waveguide structure 33 that allows the waveguide signal to bypass the power divider 21, as shown. Mechanical waveguide switches 25a,b are used to transfer energy around the RF power divider 21, thus bypassing the function it provides. Switch 25a is positioned just before the input port to the divider 21 so that the full power radar pulse train can be redirected around the divider 21 to switch 25b on demand. The system is suitably designed such that the switches do not operate unless the transmitted power is off so that no switching in this mode can take place with the transmitter generating RF energy pulses. Thus, full transmit power can be achieved in a single polarization mode. This bypass configuration allows for maximum pulse train power to be applied to the horizontally polarized channel 21a, while allowing for reception in both polarization modes. As will be understood to those in the industry, transferring power to a single polarization does not limit the possibility of receiving in both vertical and horizontal polarizations. In the bypass mode, linear depolarization ratio ("LDR") information on selected atmospheric areas can be obtained. The waveguide transfer switches utilized in this embodiment are relatively slow mechanical switches operating on the order of a few hundred milliseconds and are actuated through either a solenoid or motor drive. Suitable mechanical switches are offered by Advanced Switch Technology, Kingston, Ontario, model# AST-187, or similar switches.

For magnetron based radar systems, the receiver measures the phase-frequency relationship on a pulse basis. A burst sample is obtained prior to the RF Power divider 21 at tap 36 and transmitted via a coupler 37a to the receiver 24 for processing. This technique yields the highest possible coherency, approaching the theoretical limit for magnetron systems. Suitable coaxial magnetrons can be purchased from Communications and Power Industries, Beverly Division ("CPI"), located in Beverly, MA, offering a C band 250 KW unit under the model number VMC-1891A. Other frequency and power configuration units are also available from CPI to enable proper sampling.

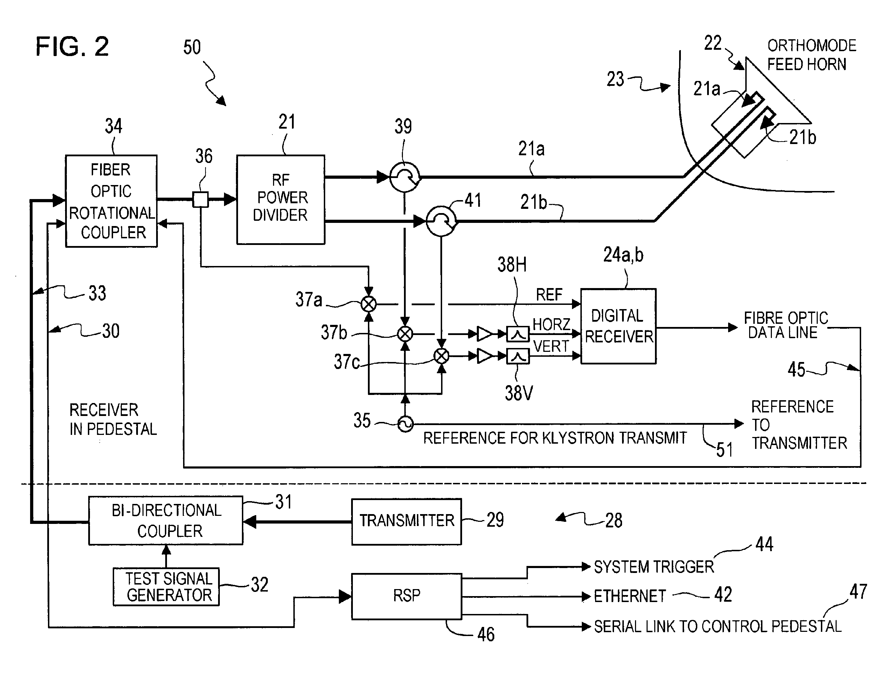

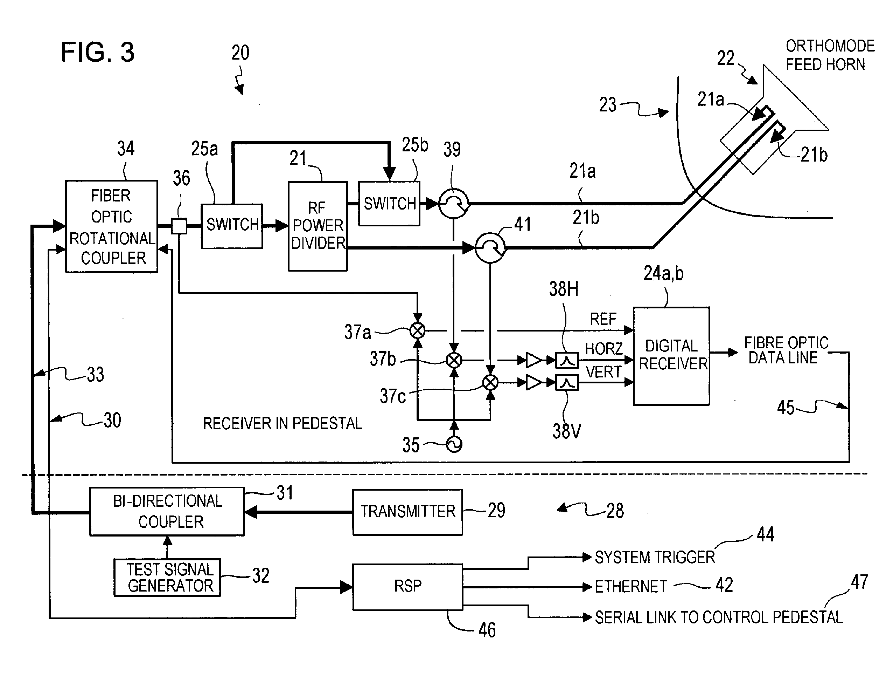

Alternatively, Klystron based radar systems 50 as shown in Figure 2 require a local oscillator positioned at the receiver and a timing reference signal 51 used to establish phase-lock to a master synthesizer located at the transmitter 29. As in a magnetron system 20 shown in Figure 3, the actual transmitted burst signal is sampled and processed by the receiver via tap 36. Therefore, compensation for the phase shift introduced by the amplification process is automatic, again allowing for very high coherency values. Suitable pulsed Klystron amplifiers can be obtained from CPI under the part number series VKC.

The high speed switch sometimes utilized in old dual polarized radar systems has been replaced in the current design by the RF power divider 21. In addition, two circulators, sometimes referred to as "duplexers" in the industry, a horizontal feed circulator 39 and a vertical feed circulator 41, have been added to provide transmitter and receiver isolation. The circulators utilized are typical ferrite circulators with preferably three, but possibly four ports--four ports giving better isolation and reflection characteristics. A suitable circulator for the present system is model part number CC#-35 available from Ferrite Components, Inc.

Figure 2 shows a system similar to the system in figure 1, but using the Klystron amplifier referenced above and incorporating an improved optical data path from the receiver subsystem 24a,b to radar signal processor 46. Transmitter subsystem 28 can be based upon various known types, such as a power amplifier, a power oscillator (e.g. a magnetron), or a pulsed Klystron amplifier. A bidirectional coupler 31 connects the output from the transmitter 29 to primary waveguide conduit 33 and allows for test signal injection into the radar system from a test signal generator 32.

Fiber optic data line 45 transmits the reflectivity signals from the digital receiver 24 through the fiber optic rotational coupler 34. Fiber optic data line 30 transmits the reflectivity signals from the fiber optic rotational coupler 34 to the radar signal processor 46. Fiber optic data lines 30 and 45 allow for the transfer of large amounts of real-time radar data to the radar signal processor 46, as well as control signals to the electrical components located above the fiber optic rotational coupler 34. The fiber optic data is transmitted through the fiber optic rotational coupler 34 to the radar signal processor. The fiber optic data line 30 bypasses the by-directional coupler 31, and slack is provided in the fiber optic data line to account for the movement of the by-directional coupler 31.

The fiber optic rotational coupler 34, as will be discussed below, allows for locating the digital receiver above the elevation rotary coupling and placing the receivers 24 very close, physically, to the antenna 23, without the addition of expensive and complicated slip rings or errors associated with streaming raw I/Q data digitally over long distances. By providing an alternate path for data transmission from the receivers to the signal processor, the slip ring assembly at most provides only paths for power, reference, Ethernet communications and/or antenna motor drives. The fiber optic rotational coupler 34 allows for locating the radar signal processor below the elevation rotary coupling inside a suitable environmental enclosure suitably distanced from the pedestal and/or the other electronic components, and conveniently accessible for maintenance.

Waveguide signal feedback port 36 (i.e. a signal tap) provides a reference signal to the digital receiver 24 via signal mixers 37a-c. The reference signal provides a feedback mechanism to the receiver 24 to compensate for phase shifts introduced in the waveguide 33 or in the fiber optic rotational coupler 34, among other types of signal changes that might occur after transmitter pulse discharge. The RF power divider 21 then divides the transmitter signal into two equal waveguides of equal power. Circulators 39 and 41 then isolate the output from power divider 21 to allow for propagation of reflected signals through waveguides 21a and 21b to be collected by the digital receiver 24 after being amplified through power amplifiers 38H and 38V.

An Ethernet transceiver 42 allows for data output and programming of the receiver 24 or programming of the radar signal processor 46. System trigger 44 provides a method for synchronized initiation of the transmitter subsystem 28 under the digital processor's control. Antenna rotation and positioning occurs via serial link control 47 to various drive motors in the antenna pedestal from the radar signal processor 46. The system trigger 44 and serial link control 47 may be handled by the radar signal processor 46. Although the control signals 42, 44 and 47 can be controlled by other computers, the actual implementation of these would occur through the fiber optic line 45. The configuration shown in Figure 2 positions the receiver electronics in the radar antenna pedestal above the elevation rotary coupler.

Figure 3 shows a block diagram representation of a relatively economical solution to create an improved dual polarization radar system 20. A radio frequency ("RF") power divider 21 splits the transmitted energy into components 21a, 21b that are transmitted to each of the polarization feeds 21a,b of the orthomode feed horn 22, appropriately positioned on a parabolic antenna 23. Two receivers are utilized 24a,b, one for each polarization mode as shown. A suitable power divider can be obtained from RF-Lambda USA LLC, located at 2708 Wickham Ct. Plano, TX 75093, under the part name WAVEGUIDE WR340 COMBINER/DIVIDER (e.g. part no. RWCB340W2).

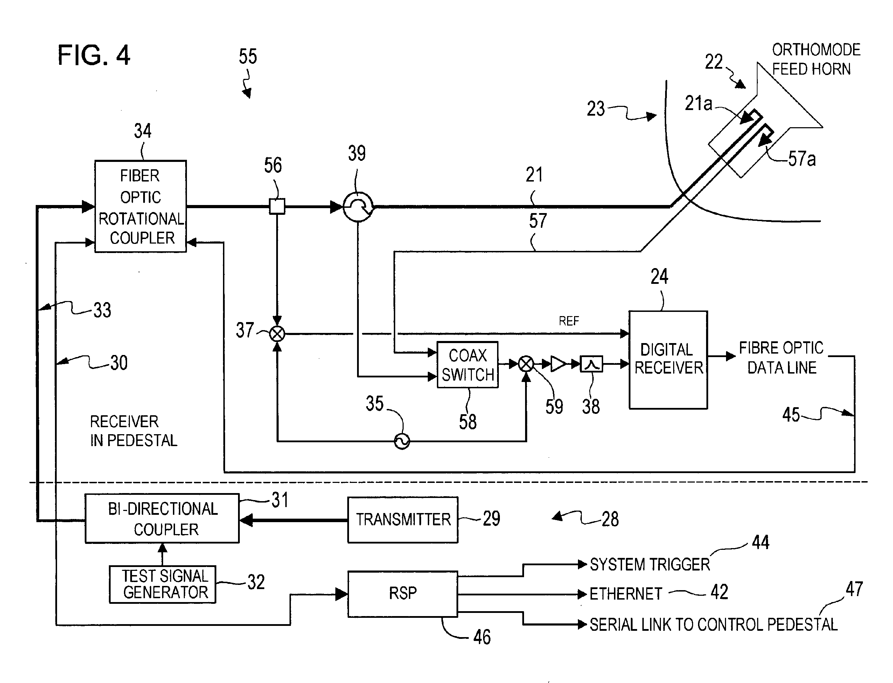

Referring now to Figure 4, it may be seen that an improved fiber optic rotational coupling design may be implemented into the dual simultaneous polarity reception path. As shown, bypass 25 and power divider elements 21 have been replaced by a tap port 56 that allows for reference signals to be shunted to mixer 37 and mixer 59. The maximum power, horizontally polarized pulse train 21 proceeds through circulator 39 and to feed horn 22 via port 21a. The orthomode feed horn then simultaneously receives both horizontally (21a) and vertically (57a) polarized reflection signals, and a coaxial switch 58 under radar processor control (or other suitable logic control) processes either the horizontal 21 or vertical 57 reflection components as dictated by associated radar processor control software. The resultant system reduces the receiver hardware required and allows for practical reception and processing of LDR data.

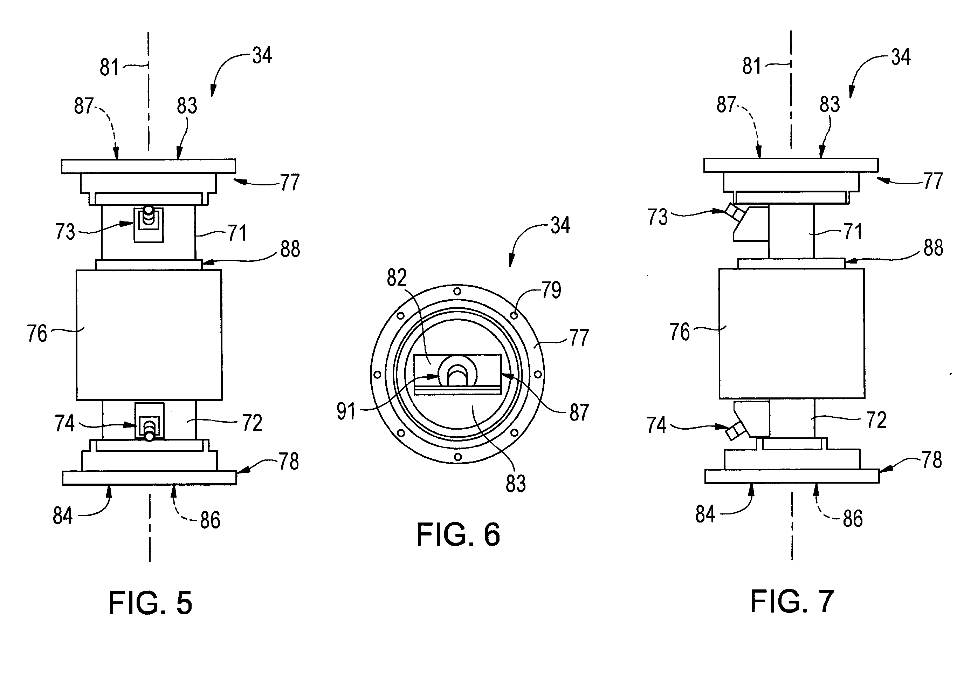

Referring now to Figure 5, it may be seen that fiber optic rotational coupler 34 includes an upper housing portion 71 and a lower housing portion 72. The upper and lower housing portions are connected via central bearing housing 76 with upper housing portion 71 being rotatably supported on central bearing housing 76 via bearing 88. Housing 76 and lower housing portion 72 are fixed relative to one another. Upper housing portion 71 includes an upper optical connector port 73 and lower housing portion 72 also includes a lower optical connector port 74. Rotational coupler 34 includes an upper mounting flange 77 that includes fastener apertures 79 to fasten coupler 34 with waveguide conduit tubing and support structure leading to the power divider 21 and antennae assembly 23. Similarly, coupler 34 includes a lower mounting flange 78 for connecting the coupler 34 with a lower waveguide assembly 33 leading to transmitter 29. Coupler 34 also includes an axis 81 extending through the center longitudinally of its elements that defines the axis of rotation of the upper portion 71.

Referring to Figure 6 in combination with like labelled elements to Figure 5, it may be seen that upper mounting flange 77 includes upper waveguide alignment face 83 that defines an upper waveguide alignment aperture 87. Aperture 87 extends along axis 81 in the form of a rectangular tube and has an interior 82 that is filled with a pressurized gas to facilitate transmission of waveguide signal energy within radar system 20 waveguide conduits. The rectangular tube terminates at its lower end at alignment aperture 86 in faceplate 84. Hence, flanges 77 and 78 typically include seals in radial grooves at the perimeter of faceplates 83 and 86 to maintain pressurization integrity of the waveguide assemblies.

As shown, interior 82 includes a coaxial waveguide member 91 that emerges from an interior wall of the rectangular interior 82 and extends along axis 81 for a majority of the interior length of 82 before proceeding back into interior wall of interior 82 in proximity to lower mounting flange 78. Coaxial waveguide member 91 includes two radio frequency ("RF") chokes located within the inner and outer conductors of the coaxial member 91 at the center of housing 76 that allow the upper portion of member 91 to rotate relative to a lower portion of member 91 and also serve as an RF and microwave signal connection for both the inner and outer conductors of the coaxial member 91. Hence, coaxial member 91 has an upper portion that rotates in fixed relation within housing portion 71 relative to bearing housing 76 and a lower stationary portion fixed within stationary lower housing portion 72 and bearing housing 76. The aforementioned structure allows free rotation of elements 77, 73, and 71 and the upper portion of member 91 relative to its lower elements 72, 74, and 78, while permitting signal propagation through coupling 34, and while maintaining an very desirable voltage standing wave ratio ("VSWR").

As more clearly shown in Figure 7, coupling 34 includes ports 73 and 74 to connect optical fiber cabling from digital receiver 24 to the radar signal processor 46. Coaxial member 91 includes a second channel within its interior housing a fiber optic cable that extends from ports 73 and 74 to the longitudinal center of coaxial member 91, and this fiber optic cable may be of the single-mode or multi-mode varieties. The fiber optic cable running between each port is bisected at the center of housing 76 at the location of the aforementioned chokes. At the point of bisection of the fiber optic cable at the location of the chokes each fiber optic line includes fiber optic tapers that expand the photonic beam within the optic cable to a larger diameter. Since the terminus of each optic cable are in close proximity and aligned, although not in direct contact, any signals within the beam traverse the gap between each terminus without significant signal degradation. The radiating elements within the taper also minimize reflections such that no tubing is required to overlap the terminus ends. This arrangement maintains a low VSWR throughout the high-speed fiber optic signal path from receiver 24 to radar signal processor 46.

As will be understood, the above configuration of rotary joint 34 is an "in-line" type that provides for inherent mechanical stability and does not require the addition of a fixed plate to stabilize the joint 34 during rotation. Both the fiber optic and waveguide channels rotate around axis 81, and both the optical channel and the RF channels do not electrically interfere with one another. Hence, a fiber optic path defined by 45 and 30 can transmit data at very high rates, and typically at rates greater than 800 Mb/second. This allows for raw radar reflectivity data to be digitized and transmitted to the radar signal processor along path 45/30 to be processed in real-time. As higher reflectivity processing bandwidth is required in the future, the fiber optical path can be scaled up to 10 giga-bits/second.

The disclosed embodiments teach a practical dual polarization weather radar system allowing for the repositioning of critical processing components below the rotary joint without the expense and error issues normally associated with transmitting data from above the elevation rotary coupler to below. These new designs eliminate the current problems experienced in current dual polarization radar systems of expensive, error prone data transmission components and expensive environmental controls.

The benefits of practical, reliable, and relatively inexpensive simultaneous dual polarization systems using an optical communications link are substantial. They provide much more information about hydrometeors, allowing for the determination of an entire scattering matrix and the correction for partial beam blockage via differential phase techniques, improved rainfall estimates, and improved hydrometeor classification.

### References

1. Doviak, R. J., V. Bringi, A. Ryzhkov, A. Zahrai, D. S. Zmic'. Considerations for Polarimetric Upgrades to Operational WSR-88D Radars. J. Atmos. and Oceanic Tech, 2000. 17, 257-278.
2. Liu, Y., J.W. Conway, E.A. Brandes, A.V. Ryzhkov, J. Vivekanandan, D.S. Zrnic, and R. Oye. The use of polarization data in the operational identification of hydrometer and non-hydrometeor targets. Preprints, 29th Conf. Radar Meteor. Montreal, Canada: American Meteorological Society 1999:178-179
3. Ryzhkov A., R. López, R. Fulton, D. Zrnic, T. Schuur, and Y. Liu. "hydrometer classification with a polarimetric radar for improved rainfall measurements and detection of hail and electrically charged regions. Preprints, 29th Conference on Radar Meteorology Montreal, Canada: American Meteorological Society, 1999: 289-292.
4. Ryzhkov, A.V. and D.S. Zrnic. "Discrimination between rain and snow with a polarimetric radar." Journal of Applied Meteorology 1999: 1228-1240.
5. Ryzhkov, A.V., D.S. Zrnic, and R. Fulton. "Area Rainfall Estimates Using Differential Phase." Journal of Applied Meteorology 2000: 263-268.
6. Skolnik, Merrill I. Introduction to Radar Systems. New York: 3rd ed 2001.
7. Vivekanandan, J., D.S. Zrnic, S.M. Ellis, R. Oye, A.V. Ryzhkov, and J.Straka. "Cloud microphysics retrieval using S-band dual-polarization radar measurements." Bulletin of the American Meteorological Society 1999: 381-388.
8. Zahrai Allen and Dr. Dusan Zrnic. "Implementation of Polarimetric Capability for the WSR-88D (NEXRAD) Radar." Long Beach, CA. American Meteorological Society 1997.
9. Zrnic, D.S., and A.V.Ryzhkov. "Polarimetry for weather surveillance radars." Bulletin of the American Meteorological Society 1999: 389-406.

## Claims

1. A weather radar system having a support pedestal, comprising:
a. an energy pulse train generator for producing radio emissions adapted for weather radar use;
b. a radio frequency power divider (21) in electrical communication with said pulse train generator for splitting said radio emissions into simultaneous dual emission components;
c. an antenna (23) in electrical communication with said power divider (21) for transmitting said simultaneous dual emission components (21a, 21b) into space in a controlled manner and for collecting reflected signals from objects of interest;
d. an orthomode feed horn (22) positioned on said antenna (23) for altering one of said emission components to have a different phase relative to said other emission component during transmission and for collecting reflectivity signals of disparate phase relative to one another;
e. a rotational coupling (34) rotationally supporting said antenna (23), said rotational coupling (34) comprising an upper rotating part and a lower stationary part, said rotational coupling (34) including a hollow radio frequency waveguide channel portion (87) that extends along its rotational axis (81) for the transmission of radio waves therethrough, the hollow waveguide channel portion (87) including a coaxial waveguide member (91) that has an upper portion and a lower portion and extends along the rotational axis (81) for a majority of the length of the hollow waveguide channel portion (87), wherein said coaxial waveguide member (91) includes two radio frequency chokes bridging the upper and lower waveguide portions and allowing the upper and lower portions (91) to rotate relative to one another and serve as an RF connection for the conductors of the coaxial waveguide member (91);
f. a receiver subsystem in electrical communication with said antenna (23) for capturing reflectivity signals collected by said antenna (23);
g. a radar system processor (46) in communication with said receiver subsystem for processing reflectivity signals collected by said antenna (23); and,
h. an optical coupler centrally disposed within said rotational coupling (34), comprising a fiber optic cable housed within the coaxial waveguide member (91) and configured to pass optical transmissions from said receiver subsystem to said system processor (46) through said rotational coupling (34), wherein the fiber optic cable is bisected at the location of the chokes.

2. A radar system as recited in claim 1, wherein said rotational coupling comprises a first connector port positioned on said upper part for receiving an upper fiber optic cable running from said receiver subsystem, a second connector port positioned on said lower part for receiving a lower fiber optic cable extending downward from said radar system, whereby said optical coupling connects said upper fiber optic cable and said lower fiber optic cable to form an optical communications link.

3. A radar system as recited in claim 2, further including a pair of channel circulators in electrical communication with said antenna and said receiver subsystem for isolating said dual emission components from said receiver subsystem.

4. A radar system as recited in claim 3, wherein said energy pulse train generator comprises a Klystron signal generator and wherein said radar system further comprises a reference signal tap in electrical communication with one of said circulators to provide a reference signal to said klystron signal generator.

5. A radar system as recited in claim 2, 3 or 4, further including a bypass switch in electrical communication with said pulse train generator and said antenna to selectively allow full radio emissions transmission power to be transferred to said antenna.

6. A radar system as recited in claim 2, 3, 4 or 5, wherein said rotational comprises an in-line rotational coupling.

7. A method for utilizing simultaneous dual polarized radio emissions in a radar system having a radar pedestal, comprising the steps of:
a. generating a radio emission suitable for radar system usage;
b. splitting said radio emission into dual emission components;
c. passing said emission components through an orthomode feed horn to alter the phase of one of said components by substantially 90 degrees with respect to said other component;
d. simultaneously directing dual polarized emissions into space in a controlled manner;
e. collecting polarized emission reflections from objects of interest resulting from said step of directing said dual polarized emissions into space;
f. passing said collected polarized emission reflections to a receiver subsystem co-located with said antenna and digitizing them;
g. passing said digitized data through an optical communications link disposed within a hollow radio frequency waveguide channel disposed within a rotational coupler (34) supported by said radar pedestal, wherein said digitized data passes within a fibre optic line housed within a coaxial waveguide member (91) axially traversing said rotational coupler (34) along its rotational axis inside said hollow radio frequency waveguide wherein the coaxial waveguide member (91) has an upper portion and a lower portion, extends along the rotational axis (81) for a majority of the length of the hollow waveguide (87), and includes two radio frequency chokes bridging the upper and lower portions of the coaxial waveguide member (91) and allowing the upper and lower portions of the coaxial waveguide member (91) to rotate relative to one another and serve as an RF connection between them and, wherein the fiber optic line is bisected at the location of the chokes; and
h. processing said digitized data in a radar signal processor located below said radar pedestal.

8. A method as recited in claim 7, wherein said step of passing said digitized data through said fiber optic line in said rotational coupling occurs at a data signal speed of 800 mega-bits per second or greater.

9. A method as recited in claim 7 or 8, wherein said collecting step comprises the steps of collecting said emission reflections in an antenna and focusing said collected reflections into an orthomode feed horn to create separate reception signals substantially 90 degrees out of phase with one another.

10. A method as recited in any of claims 7 to 9, further including the step of sending radar antenna orientation commands through said optical communications link.

## Patentansprüche

1. Wetterradarsystem mit einem Stützsockel, das aufweist:
a. einen Energieimpulsfolgengenerator zum Erzeugen von Radioemissionen, die für eine Verwendung als Wetterradar angepasst sind;
b. einen Radiofrequenzleistungsteiler (21) in elektrischer Verbindung mit dem Impulsfolgengenerator zum Teilen der Radioemissionen in gleichzeitige duale Emissionskomponenten;
c. eine Antenne (23) in elektrischer Verbindung mit dem Leistungsteiler (21) zum Übertragen der gleichzeitigen dualen Emissionskomponenten (21a, 21b) in einen Raum in einer gesteuerten Weise und zum Sammeln von reflektierten Signalen von Objekten von Interesse;
d. ein orthomodales Zuführhorn (22), das auf der Antenne (23) positioniert ist, um eine der Emissionskomponenten zu verändern, sodass sie eine verschiedene Phase relativ zu der anderen Emissionskomponente während einer Transmission hat, und zum Sammeln der Reflektionssignale von zueinander ungleicher Phase;
e. einen Rotationskoppler (34), der kreisförmig die Antenne (23) stützt, wobei der Rotationskoppler (34) einen oberen rotierenden Teil und einen unteren stationären Teil aufweist, die Rotationskoppler (34) einen hohlen Radiofrequenzwellenleiterkanalabschnitt (87) für die Übertragung von Radiowellen dadurch enthält, der sich entlang seiner Rotationsachse (81) erstreckt, wobei der hohle Wellenleiterkanalabschnitt (87) ein koaxiales Wellenleiterbauteil (91) enthält, das einen oberen Abschnitt und einen unteren Abschnitt aufweist, und sich entlang der Rotationsachse (81) über den größten Teil der Länge des hohlen Wellenleiterkanalabschnitts (87) erstreckt, wobei das koaxiale Wellenleiterbauteil (91) zwei Radiofrequenzdrosseln enthält, die obere und untere Wellenleiterabschnitte überbrücken und den oberen und unteren Abschnitten (91) ermöglichen, sich relativ zueinander zu drehen, und die als eine RF-Verbindung für die Leiter des koaxialen Wellenleiterbauteils (91) dienen;
f. ein Empfängersubsystem in elektrischer Verbindung mit der Antenne (23) zum Erfassen von Reflektionssignalen, die durch die Antenne (23) gesammelt wurden;
g. einen Radarsystemprozessor (46) in Verbindung mit dem Empfängersubsystem zum Verarbeiten von Reflektionssignalen, die durch die Antenne (23) gesammelt werden; und
h. einen optischen Koppler, der zentral innerhalb der Rotationskopplung (34) angeordnet ist, der ein optisches Faserkabel aufweist, das in dem koaxialen Wellenleiterbauteil (91) untergebracht ist und konfiguriert ist, optische Transmissionen von dem Empfängersubsystem zu dem Systemprozessor (46) durch die Rotationskopplung (34) durchzulassen, wobei das optische Faserkabel an dem Ort der Drossel zweigeteilt ist.

2. Radarsystem nach Anspruch 1, wobei die Rotationskopplung einen ersten Verbindungsanschluss zum Aufnehmen eines oberen optischen Faserkabels, der auf dem oberen Teil positioniert ist, das von dem Empfängersubsystem kommt, und einen zweiten Verbindungsanschluss zum Aufnehmen eines unteren optischen Faserkabels, das sich nach unten von dem Radarsystem erstreckt, aufweist, der auf dem unteren Teil positioniert ist, wodurch die optische Kopplung das obere optische Faserkabel und das untere optische Faserkabel verbindet, um eine optische Kommunikationsverbindung zu bilden.

3. Radarsystem nach Anspruch 2, ferner mit einem Paar von Kanalzirkulatoren in elektrischer Verbindung mit der Antenne und dem Empfängersubsystem zum Isolieren der dualen Emissionskomponenten von dem Empfängersubsystem.

4. Radarsystem nach Anspruch 3, wobei der Energieimpulsfolgengenerator einen Klystronsignalgenerator aufweist, und wobei das Radarsystem ferner einen Referenzsignalabgriff in elektrischer Verbindung mit einem der Zirkulatoren aufweist, um ein Referenzsignal an den Klystronsignalgenerator bereitzustellen.

5. Radarsystem nach Anspruch 2, 3, oder 4, ferner mit einem Bypassschalter in elektrischer Verbindung mit dem Impulsfolgengenerator und der Antenne, um es selektiv zu ermöglichen, dass eine volle Radioemissionstransmissionsleistung zu der Antenne transferiert wird.

6. Radarsystem nach Anspruch 2, 3, 4 oder 5, wobei der Rotationskoppler einen linearen Rotationskoppler aufweist.

7. Verfahren zum Verwenden von gleichzeitigen dualen polarisierten Radioemissionen in einem Radarsystem mit einem Radarsockel, das die Schritte aufweist:
a. Erzeugen einer Radioemissionen, die für eine Radiosystemverwendung geeignet ist;
b. Teilen der Radioemission in duale Emissionskomponenten;
c. Durchlassen der Emissionskomponenten durch ein orthomodales Zuführhorn, um die Phase von einer der Komponenten um im Wesentlichen 90 Grad mit Bezug auf die andere Komponente zu ändern;
d. gleichzeitiges Richten der dualen Emissionen in einen Raum in einer gesteuerten Weise;
e. Sammeln von polarisierten Emissionsreflektionen von Objekten von Interesse, die aus dem Schritt des Richtens der dualen polarisierten Emissionen in den Raum resultieren;
f. Durchlassen der gesammelten polarisierten Emissionsreflektionen zu einem Empfängersubsystem, das mit der Antenne zusammen lokalisiert ist, und Digitalisieren von ihnen;
g. Durchlassen der digitalisierten Daten durch eine optische Kommunikationsverbindung, die in einem hohlen Radiofrequenzwellenleiterkanal angeordnet ist, der in einem Rotationskoppler (34) angeordnet ist, der durch den Radarsockel gestützt wird, wobei die digitalisierten Daten innerhalb einer optischen Faserleitung durchgehen, die innerhalb eines koaxialen Wellenleiterbauteils (91) untergebracht ist, das axial durch den Rotationskoppler (34) entlang seiner Rotationsachse innerhalb des hohlen Radiofrequenzwellenleiters hindurchgeht, wobei das koaxiale Wellenleiterbauteil (91) einen oberen Abschnitt und einen unteren Abschnitt aufweist, sich entlang der Rotationsachse (81) für einen großen Teil der Länge des hohlen Wellenleiters (87) erstreckt, und zwei Frequenzdrosseln enthält, die die oberen und unteren Abschnitte des koaxialen Wellenleiterbauteils (91) verbindet, und es den oberen und unteren Abschnitten des koaxialen Wellenleiterbauteils (91) ermöglicht, relativ zueinander zu rotieren, und als eine RF-Verbindung zwischen ihnen zu dienen, und wobei die optische Faserleitung an den Ort der Drosseln zweigeteilt ist; und
h. Verarbeiten der digitalisierten Daten in einem Radarsignalprozessor, der unter dem Radarsockel lokalisiert ist.

8. Verfahren nach Anspruch 7, wobei der Schritt des Durchlassens der digitalisierten Daten durch die optische Faserleitung in dem Rotationskoppler mit einer Datensignalgeschwindigkeit von 800 Megabits pro Sekunde oder größer erfolgt.

9. Verfahren nach Anspruch 7 oder 8, wobei der Sammelschritt die Schritte des Sammelns der Emissionsreflektionen in einer Antenne und Fokussieren der gesammelten Reflektionen in einem orthomodalen Zuführhorn aufweist, um getrennte Empfangssignale, die im Wesentlichen um 90 Grad zueinander außer Phase sind, zu erzeugen.

10. Verfahren nach einem der Ansprüche 7 bis 9, ferner mit dem Schritt des Sendens von Radarantennenorientierungsbefehlen durch die optische Kommunikationsverbindung.

## Revendications

1. Système de radar météorologique comprenant un socle de support, comprenant :
a. un générateur de train d'impulsions d'énergie pour produire des émissions radio adaptées pour une utilisation de radar météorologique ;
b. un diviseur de puissance de radiofréquence (21) qui est en communication électrique avec ledit générateur de train d'impulsions pour diviser lesdites émissions radio en composantes d'émission doubles simultanées ;
c. une antenne (23) qui est en communication électrique avec ledit diviseur de puissance (21) afin de transmettre lesdites composantes d'émission doubles simultanées (21a, 21b) dans l'espace d'une manière contrôlée et pour collecter des signaux réfléchis en provenance d'objets pertinents ;
d. un cornet d'alimentation orthomode (22) qui est positionné sur ladite antenne (23) pour altérer une première desdites composantes d'émission afin d'obtenir une phase différente par rapport à ladite autre composante d'émission pendant la transmission et pour collecter des signaux de réflectivité de phase disparate l'une par rapport à l'autre ;
e. un couplage rotatif (34) qui supporte de façon rotative ladite antenne (23), ledit couplage rotatif (34) comprenant une partie rotative supérieure et une partie stationnaire inférieure, ledit couplage rotatif (34) comprenant une partie de canal de guide d'ondes de radiofréquence creuse (87) qui s'étend le long de son axe de rotation (81) pour transmettre des ondes radio à travers celle-ci, la partie de canal de guide d'ondes creuse (87) comprenant un élément de guide d'ondes coaxial (91) qui présente une partie supérieure et une partie inférieure et qui s'étend le long de l'axe de rotation (81) pour une majeure partie de la longueur de la partie de canal de guide d'ondes creuse (87), dans lequel ledit élément de guide d'ondes coaxial (91) comprend deux étrangleurs de radiofréquence qui relient les parties de guide d'ondes supérieure et inférieure et qui permettent aux parties supérieure et inférieure (91) de tourner l'une par rapport à l'autre et de servir de connexion de radiofréquence pour les conducteurs de l'élément de guide d'ondes coaxial (91) ;
f. un sous-système de réception qui est en communication électrique avec ladite antenne (23) pour capturer des signaux de réflectivité collectés par ladite antenne (23) ;
g. un processeur de système de radar (46) qui est en communication avec ledit sous-système de réception afin de traiter des signaux de réflectivité collectés par ladite antenne (23) ; et
h. un coupleur optique qui est disposé de façon centrale à l'intérieur dudit couplage rotatif (34), comprenant un câble en fibre optique qui est logé à l'intérieur de l'élément de guide d'ondes coaxial (91) et qui est configuré de manière à transmettre des transmissions optiques dudit sous-système de réception audit processeur de système (46) par l'intermédiaire dudit couplage rotatif (34), dans lequel le câble en fibre optique est bissecté à l'endroit des étrangleurs.

2. Système de radar selon la revendication 1, dans lequel ledit couplage rotatif comprend un premier port de connecteur qui est positionné sur ladite partie supérieure pour recevoir un câble en fibre optique supérieur qui s'étend à partir dudit sous-système de réception, un deuxième port de connecteur qui est positionné sur ladite partie inférieure pour recevoir un câble en fibre optique inférieur qui s'étend vers le bas à partir dudit système de radar, dans lequel ledit couplage optique connecte ledit câble en fibre optique supérieur et ledit câble en fibre optique inférieur de manière à former un lien de communication optique.

3. Système de radar selon la revendication 2, comprenant en outre une paire de circulateurs à canaux qui est en communication électrique avec ladite antenne et ledit sous-système de réception afin d'isoler lesdites composantes d'émission doubles dudit sous-système de réception.

4. Système de radar selon la revendication 3, dans lequel ledit générateur de train d'impulsions d'énergie comprend un générateur de signaux Klystron et dans lequel ledit système de radar comprend en outre une source de signaux de référence qui est en communication électrique avec l'un desdits circulateurs afin de fournir un signal de référence audit générateur de signaux Klystron.

5. Système de radar selon la revendication 2, 3 ou 4, comprenant en outre un interrupteur de dérivation qui est en communication électrique avec ledit générateur de train d'impulsions et ladite antenne afin de permettre de façon sélective qu'une pleine puissance de transmission d'émissions radio soit transférée à ladite antenne.

6. Système de radar selon la revendication 2, 3, 4 ou 5, dans lequel ladite rotation comprend un couplage rotatif en ligne.

7. Procédé d'utilisation d'émissions radio polarisées doubles simultanées dans un système de radar comprenant un socle de radar, comprenant les étapes suivantes :
a. générer une émission radio appropriée pour l'utilisation d'un système de radar ;
b. diviser ladite émission radio en composantes d'émission doubles ;
c. faire passer lesdites composantes d'émission à travers un cornet d'alimentation orthomode afin d'altérer la phase de l'une desdites composantes de sensiblement 90 degrés par rapport à ladite autre composante ;
d. diriger simultanément des émissions polarisées doubles dans l'espace d'une manière contrôlée ;
e. collecter des réflexions d'émissions polarisées en provenance d'objets pertinents résultant de ladite étape de direction desdites émissions polarisées doubles dans espace ;
f. transmettre lesdites réflexions d'émissions polarisées collectées à un sous-système de réception qui est co-disposé avec ladite antenne et numériser celles-ci ;
g. faire passer lesdites données numérisées à travers un lien de communication optique qui est disposé à l'intérieur d'un canal de guide d'ondes de radiofréquence creux situé à l'intérieur d'un coupleur rotatif (34) supporté par ledit socle de radar, dans lequel lesdites données numérisées passent à l'intérieur d'une ligne de fibre optique logée à l'intérieur d'un élément de guide d'ondes coaxial (91) qui traverse axialement ledit coupleur rotatif (34) le long de son axe de rotation à l'intérieur dudit guide d'ondes de radiofréquence creux, dans lequel l'élément de guide d'ondes coaxial (91) présente une partie supérieure et une partie inférieure, s'étend le long de l'axe de rotation (81) pour une majeure partie de la longueur du guide d'ondes creux (87) et comprend deux étrangleurs de radiofréquence qui relient les parties supérieure et inférieure de l'élément de guide d'ondes coaxial (91) et qui permettent aux parties supérieure et inférieure de l'élément de guide d'ondes coaxial (91) de tourner l'une par rapport à l'autre et de servir de connexion de radiofréquence entre celles-ci, dans lequel la ligne de fibre optique est bissectée à l'endroit des étrangleurs ; et
h. traiter lesdites données numérisées dans un processeur de signaux radar qui est situé en dessous dudit socle de radar.

8. Procédé selon la revendication 7, dans lequel ladite étape de passage desdites données numérisées à travers ladite ligne de fibre optique dans ledit couplage rotatif se produit à une vitesse de signal de données de 800 mégabits par seconde, ou plus.

9. Procédé selon la revendication 7 ou 8, dans lequel ladite étape de collecte comprend les étapes de collecte desdites réflexions d'émissions dans une antenne et la concentration desdites réflexions collectées dans un cornet d'alimentation orthomode afin de créer des signaux de réception séparés présentant un décalage de phase de sensiblement 90 degrés les uns par rapport aux autres.

10. Procédé selon l'une quelconque des revendications 7 à 9, comprenant en outre l'étape consistant à envoyer des commandes d'orientation de l'antenne radar par l'intermédiaire du lien de communication optique.
